# EUROPÄISCHE PATENTSCHRIFT

(11) **EP 1 099 501 B1**
(45) Veröffentlichungstag und Bekanntmachung des Hinweises auf die Patenterteilung: **04.05.2005**
(21) Anmeldenummer: 00123090.3
(22) Anmeldetag: 25.10.2000
(51) Int. Cl.: B23D 25/12

(54) **Hochgeschwindigkeitsschere zum Querteilen von Walzband**
High speed shearing machine for cutting rolled stock
Cisaille volante pour couper des bandes laminées

(30) Priorität: 10.11.1999 DE 19953908
(43) Veröffentlichungstag der Anmeldung: 16.05.2001
(73) Patentinhaber: SMS Demag AG, 40237 Düsseldorf (DE)
(72) Erfinder: Grafe, Horst, 57271 Hilchenbach (DE); Merz, Jürgen, 57223 Kreuztal (DE)
(74) Vertreter: Valentin, Ekkehard, Dipl.-Ing.

(56) Entgegenhaltungen:
- EP-A- 0 911 125
- DE-A- 1 427 167
- GB-A- 257 278
- GB-A- 464 264
- GB-A- 477 076
- US-A- 1 984 913
- US-A- 4 004 479

## Beschreibung

Die Erfindung betrifft eine Hochgeschwindigkeitsschere zum Querteilen von Walzband mit einer ersten Messertrommel mit vergleichsweise größerem Durchmesser, und einer zweiten Messertrommel mit vergleichsweise kleinerem Durchmesser, die mit einer Getriebeübersetzung rotationsgekoppelt sind und die Trommeln fest in je zwei Lagerstücken innerhalb eines Maschinenrahmens gelagert sind, wobei die Schere Mittel aufweist, die das Band unter Längsspannung vor und hinter den Messertrommeln durch den Trommelspalt führen und das unter Zugspannung stehende Band bei seinem Transport durch die Schere auf Überführungsrollen gelagert oder von ihnen baufschlagt ist, welche das Band jeweils vor Durchlauf des unteren Messers anheben, und vor Durchlauf des oberen Messers absenken und wobei die Trommeln mit Ihnen fest verbundene, miteinander im spielfreien bzw. spielarmen Eingriff befindliche Synchronzahnräder besitzen, die unterschiedliche Wälzkreisdurchmesser in der Größenordnung der Messerkreisdurchmesser aufweisen. Die Erfindung betrifft auch ein Verfahren zum Betreiben der genannten Schere.

Hochgeschwindigkeitsscheren zum Querteilen von Walzband sind in einigen unterschiedlichen Ausführungen bekannt.

Das Dokument DE 197 46 528 A beschreibt eine Hochgeschwindigkeits-Schere umfassend zwei Trommeln, von welchen eine mit Meißelmesser und die andere mit einem damit zusammenwirkenden Amboss ausgestattet bzw. als solcher ausgebildet ist. Mit Hilfe einer gesteuerten Stellvorrichtung werden beide Trommeln zum Trennvorgang eines durchlaufenden Walzbandes gegeneinander bewegt. Eine Synchronisierung der beiden Trommeln erfolgt mittels elektrischen, elektronischen oder getriebetechnischen Mitteln.

Die EP 0 904 877 A2 offenbart eine Hochgeschwindigkeitsschere mit Messertrommeln von geringfügigst unterschiedlichen Durchmessern, die mit geringer Geschwindigkeitsdifferenz über ein extemes Verzweigungs-Getriebe angetrieben werden. Mit Hilfe einer Anstellvorrichtung über Spreizhebel werden die Trommeln bei gegenüberliegender Position der Messer in Schneidposition gebracht und nach erfolgtem Schnitt des Walzbandes wieder voneinander wegbewegt.

Die DE-OS 26 54 866 beschreibt eine fliegende Schermaschine der Drehtrommelbauart mit rotativ miteinander gekoppelten Messertrommeln. Diese Schermaschine umfaßt eine Trommeldrehvorrichtung mit einer beide Trommeln koppelnde Kraftübertragung für Geschwindigkeiten synchron mit der Laufgeschwindigkeit des zugeführten Materials, weiterhin eine Trommelstellvorrichtung zum Verstellen einer Schertrommel zwischen einer geöffneten Position und einer Schneidposition, sowie eine Steuereinrichtung für den Motor der Stellvorrichtung, welche das Anlaufen der ersten Schertrommel sowie das Anstellen in die Schneidposition und das Zurückbewegen der Trommel in die Ausgangsstellung steuert.

Die erste und zweite Schertrommel weist ein Durchmesserverhältnis von 2 zu 3 auf und sind so übersetzt, daß drei Umdrehungen der ersten Trommel auf zwei Umdrehungen der zweiten Trommel entfallen und die Trommelstellvorrichtung so gesteuert wird, daß jeweils die erste Trommel nach sechs Umdrehungen und die zweite Trommel nach vier Umdrehungen zu einem Schneidvorgang zusammentreffen.

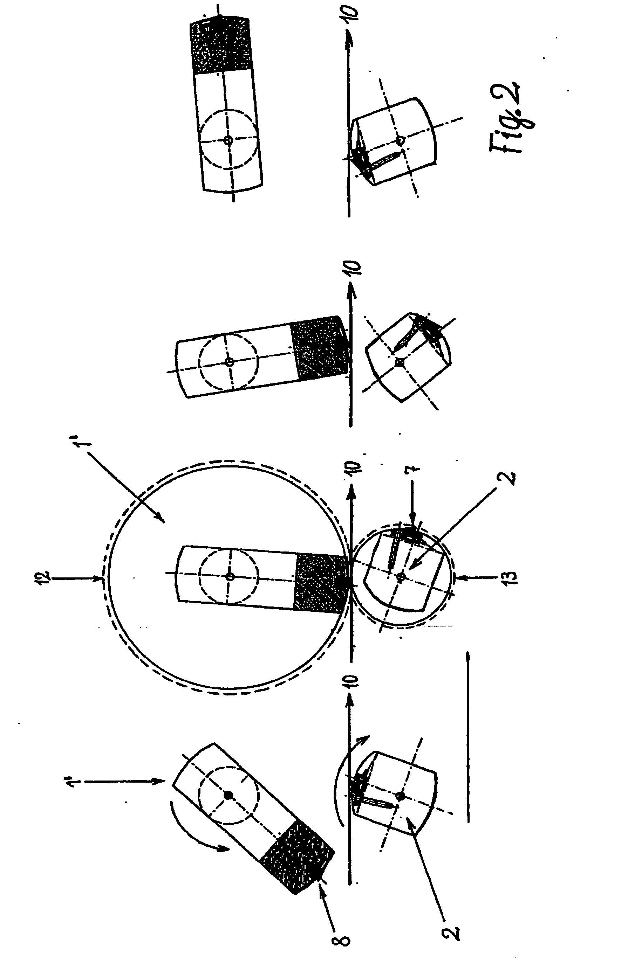

Wie aus dieser Vorveröffentlichung, insbesondere aus der Figur 2 hervorgeht, ist der konstruktive Aufwand sowohl für die koppelnde Kraftübertragung der Trommel als auch für die Trommelstellvorrichtung sowie für die hierfür benötigte Steuereinrichtung außerordentlich groß und störanfällig. Bei der Kraftübertragung sind fünf Zahnräder miteinander in Eingriff, so dass ein hierdurch verursachtes Spiel der Zahnflanken zu einer Winkelabweichung der miteinander zu koordinierenden Stellungen der Trommelmesser und damit zu Beschädigungen sowohl der Schere, als auch zu unsauberen Schnitten führen kann.

Das Dokument GB-A-464 264 offenbart eine fliegende Schere mit einem Paar rotierbarer Schneidenträgem mit je einer Schneide und Mitteln, zur gegenläufigen Rotation der Schneidenträger und zum Schnitt nach einer Anzahl von Umdrehungen eines oder beider Messerträger sowie mit Mitteln zum Auslenken des Schneidgutes von den Schneiden zwischen den Schnitten, wobei Überführungsrollen das Band vor Durchlauf des unteren Messers anheben und vor Durchlauf des oberen Messers absenken. Damit wird das unerwünschte Auftreffen auf das Band vermieden.

Eine vergleichbare Schere ist auch aus der US-A-1 984 913 bekannt.

Das Dokument GB-A-477 076 offenbart eine fliegende Schere mit einem Paar Schneidenträger mit zusammenwirkbaren Schneiden, wobei der untere Schneidenträger eingerichtet ist, um das Band über die horizontale Ebene zu führen, in welcher der Schnitt erfolgt. Die Schere hat ferner Mittel zum Erfassen des Bandes beim Einlauf in die Schere, nach einem Schnitt und zum Vorwärtsführen in oder über die horizontale Schnittebene.

Ausgehend vom vorgenannten Stand der Technik, liegt der Erfindung die Aufgabe zugrunde, eine Hochgeschwindigkeitsschere zum Schneiden von Warm- und/oder Kaltband unter Vermeidung der angesprochenen Schwierigkeiten und technischen Grenzen so weiterzubilden, daß einerseits exakte Schnitte bei großen Bandgeschwindigkeiten sowie bei minimalen Banddicken sicher durchführbar sind. Der hierfür erforderliche konstruktive und mechanische bzw. steuerungstechnische Aufwand sollte reduziert werden. Das Risiko einer Beschädigung der Messer bzw. der Schere sollte vermieden und ein hierfür erforderlicher Aufwand an Wartung bzw. für Ersatzteile verringert werden.

Zur Lösung der Aufgabe wird bei einer Hochgeschwindigkeitsschere zum Querteilen von Walzband der im Oberbegriff von Anspruch 1 genannten Art mit der Erfindung vorgeschlagen, dass die obere Trommel durch einen den gleichen Messerkreisdurchmesser aufweisenden Messerträger substituiert ist, der zwischen endständigen Wellenstummeln 15, 15' in Form einer Messerträgerbrücke 16 ausgebildet ist.

Der Vorteil ist bei Anwendung für große Bandgeschwindigkeiten, daß die Trommeln über mehrere Umdrehungen auf Bandgeschwindigkeit beschleunigt werden können. Das ist unabdingbar bei großen Bandgeschwindigkeiten, z.B. 20 m/s und mehr.

Weitere Ausgestaltungen der Hochgeschwindigkeitsschere nach der Erfindung sind entsprechend den in den Unteransprüchen angegebenen Konstruktionsmerkmalen vorgesehen.

Einzelheiten, Merkmale und Vorteile der Erfindung ergeben sich aus der nachstehenden Erläuterung eines in den Zeichnungen schematisch dargestellten Ausführungsbeispieles. Es zeigen:
- Figur 1: eine rein schematische Darstellung der Hochgeschwindigkeitsschere;
- Figur 2: in Seitenansicht jeweils ein Schertrommelpaar in unterschiedlichen Winkelpositionen und Drehbewegungen;
- Figur 3a: die Messertrommel der Schere in Frontansicht und teilweise im Schnitt;
- Figur 3b: eine Seitenansicht des Trommelpaares gemäß Figur 3a.

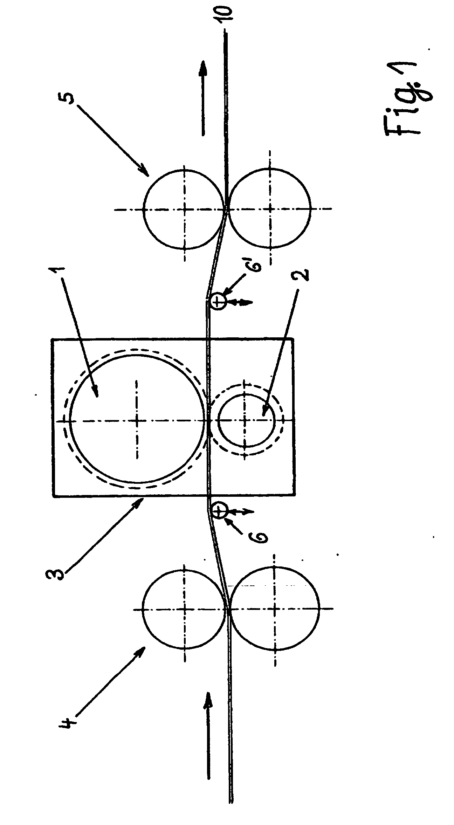

Das in der Figur 1 dargestellte Funktionsschema der erfindungsgemäßen Hochgeschwindigkeitsschere zum Querteilen von Walzband umfaßt eine erste Messertrommel 1 mit vergleichsweise größerem Durchmesser und eine zweite Messertrommel 2 mit vergleichsweise kleinerem Durchmesser, die mit einer Getriebeübersetzung (nicht gezeigt) derart rotationsgekoppelt sind, daß eine Anzahl von X-Umdrehungen der einen Trommel 1 auf eine Anzahl von Y-Umdrehungen der anderen Trommel 2 entfallen, wobei sich die Trommeln 1, 2 nach jeweils unterschiedlichen, jedoch endlichen Anzahlen von Umdrehungen X, Y in einer Schneidposition treffen.

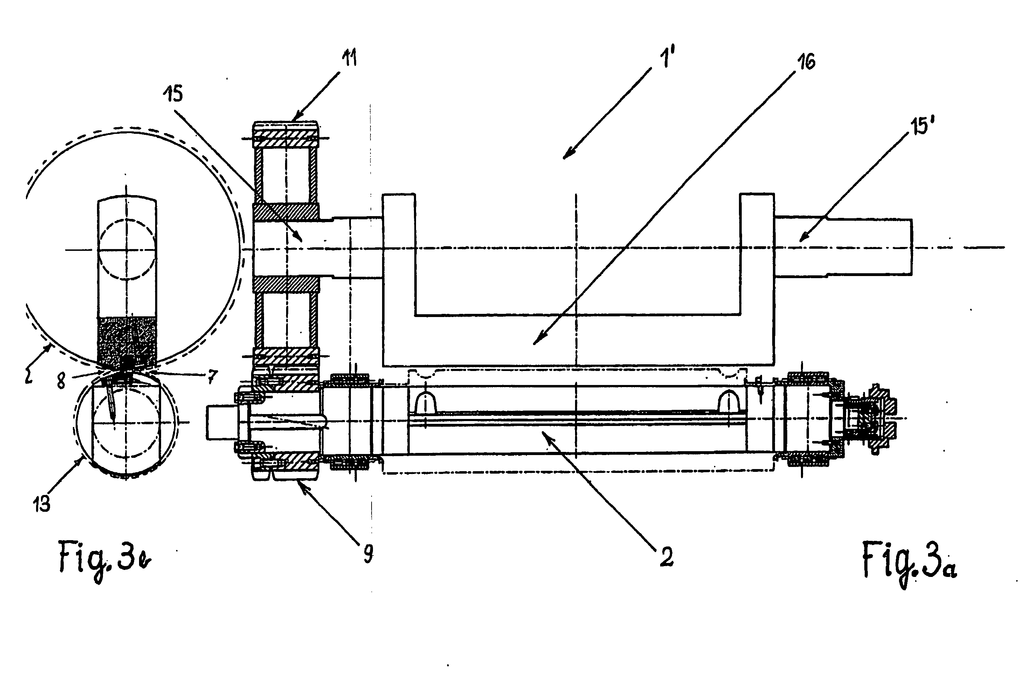

Entsprechend der erfindungsgemäßen Ausgestaltung sind die Trommeln 1, 2 der Schere fest in je zwei Lagerstücken innerhalb eines Maschinenrahmens 3 gelagert, wobei die Schere Mittel 4, 5 in Form von Treibem aufweist, die das Band 10 unter Längsspannung vor und hinter den Messertrommeln 1, 2 durch den Trommelspalt hindurchführen und wobei das unter Zugspannung stehende Band 10 bei seinem Transport durch die Schere auf Überführungsrollen 6, 6' gelagert oder von Ihnen beaufschlagt ist, welche das Band jeweils vor Durchlauf des unteren Messers 7 (Fig. 3b) anheben und bei Durchlauf des oberen Messers 8 absenken.

Durch letztere Maßnahme ist in einfacher Weise sichergestellt, daß bei "Leerdurchlauf" der oberen und der unteren Trommeln 1, 2 die entsprechenden Messer 7, 8 das Band 10 nicht berühren. Zu diesem Zweck wird das unter Zug stehende Band 10 durch eine entsprechende elektrische, elektronische oder getriebetechnische Übertragungs- und Synchronisationsvorrichtung angehoben oder abgesenkt. Hierzu wird die Anordnung der beiden Stützrollen 6, 6' in vorbeschriebener Weise zum Heben oder Absenken des Bandes 10 in Bewegung gesetzt.

Eine Ausgestaltung der Hochgeschwindigkeitsschere sieht vor, daß gemäß Darstellung in der Figur 3a die Trommeln 1, 2 mit ihnen fest verbundene, miteinander im spielfreien Eingriff befindliche Synchron-Zahnräder 9, 11 besitzen, die unterschiedliche Wälzkreisdurchmesser in der Größenordnung der Messerkreisdurchmesser 12, 13 aufweisen.

Selbstverständlich kann auch von der an sich bekannten Maßnahme Gebrauch gemacht sein, daß die Trommeln 1, 2 über Gelenkwellen mit einer Getriebeeinheit rotationsgekoppelt sind (nicht dargestellt), die ein beliebig anderes Übersetzungsverhältnis ergibt als die Synchronzahnräder 9, 11. Die Details einer derartigen Ausführung sind dem Fachmann bekannt.

Die obere Trommel 1 ist an dem dem Messer 8 entgegengesetzten peripheren Messerkreisbereich 12 stark abgeflacht. Damit kann die Schere in eine Position gedreht werden, bei der sich eine große Öffnung über Oberkante Rollgang für das Band 10 ergibt. Die große Öffnung ist bei Durchlauf/Einlauf eines Bandkopfes erforderlich, weil ein Bandkopf zum Aufbiegen des vorderen Endes nach Art eines Skis neigt und bei zu geringer Durchlauföffnung eine Havarie des Bandes im Bereich der Schere verursachen würde.

Um dies mit aller Sicherheit zu vermeiden, ist vorgesehen, daß die obere Trommel 1 durch einen den gleichen Messerkreisdurchmesser 12 aufweisenden Messerträger 1' substituiert ist, der zwischen endständigen Wellenstummeln 15, 15' in Form einer Messerträgerbrücke 16 ausgebildet ist, wie dies in der Fig. 3a dargestellt ist.

Die Überführungsrollen 6, 6' wirken mit an sich bekannten hydraulischen oder getriebetechnischen Antriebs- bzw. Stellmitteln zusammen, die mit dem jeweiligen Durchlauf des oberen oder unteren Messers 8, 7 durch den Trommelspalt syncₕronisiert sind. Damit ergibt sich eine oszillierende Aufwärts- oder Abwärtsbewegung der Führungsrollen 6, 6' mit dem dazwischen unter Spannung geführten Band 10, wobei dies infolge der in Fig. 1 gezeigten Auslenkung nach oben unter Druckspannung auf den Führungsrollen 6, 6' aufliegt. Dadurch wird erreicht, daß das Band 10 bei der Abwärtsbewegung den Führungsrollen 6, 6' problemlos folgt.

Eine weitere zweckmäßige Ausgestaltung der Schere ergibt sich dadurch, daß die Schere anstelle von Messern 7, 8 an der einen Trommel 8 vorzugsweise mit einem Meißel und an der anderen Trommel 2 mit einem Amboss ausgestattet ist. Eine derartige Ausbildung hat den Vorteil, daß eine gewisse Toleranz in der Winkelstellung zwischen Messer und Amboss problemlos zu einem sauberen und gratfreien Schnitt führt.

Und schließlich ist vorgesehen, dass die beiden Trommeln 1, 2 rotativ gegeneinander verspannt bzw. vorgespannt sind und/oder das Zahnflankenspiel minimiert bzw. kompensiert wird, bspw. indem das Zahnritzel 9 radial geteilt und die Teile zwecks Kompensation des Zahnflankenspiels rotativ gegeneinander vorgespannt sind.

Fig. 2 zeigt einzelne Phasen zweier mit unterschiedlicher Rotationsgeschwindigkeit umlaufender Messertrommeln bzw. Messerträger 1', 2 in unterschiedlichen Positionen relativ zueinander. Mit den Bezugszeichen 7, 8 ist einerseits das untere Messer, und andererseits das obere Messer an der jeweiligen Trommel gekennzeichnet. Sie treffen sich nur einmal innerhalb einer durch das Übersetzungsverhältnis unterschiedlich vorgegebene Anzahl von Umläufen jeder Trommel 1, 2 und öffnen danach oder davor jeweils einen Durchlaufspalt für das Walzband 10.

Aufgrund dieses Übersetzungsverhältnisses zwischen den beiden Trommeln 1, 2 wird in einer Beschleunigungsphase der beiden Trommeln ein Anlaufen derselben bis zur Transportgeschwindigkeit des Walzbandes vor dem Schneidvorgang bis zur Schneidposition ermöglicht.

In Fig. 2 sind weiterhin die Messerkreise des oberen Messerträgers mit dem Bezugszeichen 12 und der untere Messerkreis der Messertrommel 2 mit dem Bezugszeichen 13 eingezeichnet.

### Bezugszeichen

- 1: obere Trommel
- 2: untere Trommel
- 3: Maschinenrahmen
- 4: Treiber
- 5: Treiber
- 6: Überführungsrolle
- 7: Messer unten
- 8: Messer oben
- 9: Zahnrad unten
- 10: Walzband
- 11: Zahnrad oben
- 12: Messerkreis oben
- 13: Messerkreis unten

## Patentansprüche

1. Hochgeschwindigkeitsschere zum Querteilen von Walzband mit einer ersten Messertrommel (1) mit vergleichsweise größerem Durchmesser und einer zweiten Messertrommel (2) mit vergleichsweise kleinerem Durchmesser, die mit einer Getriebeübersetzung roationsgekoppelt sind und die Trommeln (1, 2) fest in je zwei Lagerstücken innerhalb eines Maschinenrahmens (3) gelagert sind, wobei die Schere Mittel (4, 5) aufweist, die das Band (10) unter Längsspannung vor und hinter den Messertrommeln (1, 2) durch den Trommelspalt führen und das unter Zugspannung stehende Band (10) bei seinem Transport durch die Schere auf Überführungsrollen (6) gelagert oder von ihnen beaufschlagt ist, welche das Band (10) jeweils vor Durchlauf des unteren Messers (7) anheben, und vor Durchlauf des oberen Messers (8) absenken und wobei die Trommeln (1, 2) mit Ihnen fest verbundene, miteinander im spielfreien bzw. spielarmen Eingriff befindliche Synchronzahnräder (9, 11) besitzen, die unterschiedliche Wälzkreisdurchmesser in der Größenordnung der Messerkreisdurchmesser (12, 13) aufweisen,
**dadurch gekennzeichnet,**
**dass** die obere Trommel (1) durch einen den gleichen Messerkreisdurchmesser (12) aufweisenden Messerträger (1') substituiert ist, der zwischen endständigen Wellenstummeln (15, 15') in Form einer Messerträgerbrücke (16) ausgebildet ist.

2. Schere nach Anspruch 1,
**dadurch gekennzeichnet,**
**dass** die Überführungsrollen (6, 6') mit hydraulischen oder getriebetechnischen Antriebs- bzw. Stellmitteln zusammenwirken, die mit dem jeweiligen Durchlauf des oberen oder unteren Messers (8, 7) durch den Trommelspalt synchronisiert sind.

3. Schere nach Anspruch 1 oder 2,
**dadurch gekennzeichnet,**
**dass** diese anstelle von Messern (7, 8) an einer Trommel (1) mit einem Meißel und an der anderen Trommel (2) mit einem Amboss ausgestattet ist.

4. Schere nach einem oder mehreren der Ansprüche 1 bis 3,
**dadurch gekennzeichnet,**
**dass** die beiden Trommeln (1, 2) rotativ gegeneinander verspannt bzw. vorgespannt sind und/oder das Zahnflankenspiel minimiert bzw. kompensiert wird, bspw. indem das Zahnritzel (9) radial geteilt ist und dass die Teile zwecks Kompensation des Zahnflankenspiels rotativ gegeneinander vorgespannt sind.

5. Verfahren zum Betreiben der Hochgeschwindigkeitsschere nach einem der Ansprüche 1 bis 4,
**dadurch gekennzeichnet,**
**dass** eine Anzahl von X-Umdrehungen der einen Trommel auf eine Anzahl von Y-Umdrehungen der anderen Trommel entfallen, wobei sich die Trommeln (1, 2) nach jeweils unterschiedlichen, jedoch endlichen Anzahlen von Umdrehungen X, Y in einer Schneidposition treffen.

## Claims

1. High-speed cutter for cross-cutting of rolled strip, with a first knife drum (1) with comparatively larger diameter and a second knife drum (2) with comparatively smaller diameter, which are rotationally coupled by a speed-change transmission and the drums (1, 2) are each fixedly mounted in two bearing chocks within a machine frame (3), wherein the cutter comprises means (4, 5) which guide the strip (10) under longitudinal tension in front of and behind the knife drums (1, 2) through the drum gap and the strip (10) disposed under tensile stress during transport thereof through the cutter is borne on transfer rollers (6) or loaded by them, which raise the strip (10) on each occasion before running through the lower knife (7) and lower it before running through the upper knife (8) and wherein the drums (1, 2) have synchronising gearwheels (9, 11), which are fixedly connected therewith and disposed in play-free or low-play engagement with one another and which have different rolling circle diameters in the order of magnitude of the knife circle diameter (12, 13), **characterised in that** the upper drum (1) is substituted by a knife carrier (1') which has the same knife circle diameter (12) and which is constructed between shaft stubs (15, 15'), which are in the form of a knife carrier bridge (16), at the ends.

2. Cutter according to claim 1, **characterised in that** the transfer rollers (6, 6') cooperate with hydraulic or geared driving or setting means which are synchronised with the respective transit of the upper or lower knife (8, 7) through the drum gap.

3. Cutter according to claim 1 or 2, **characterised in that** this is equipped with, instead of knives (7, 8), a chisel at one drum (1) and an anvil at the other drum (2).

4. Cutter according to one or more of claims 1 to 3, **characterised in that** the two drums (1, 2) are rotationally tightened or biased relative to one another and/or the tooth flank play is minimised or compensated, for example **in that** the pinion (9) is radially divided and that the parts are rotationally biased relative to one another for the purpose of providing compensation for the tooth flank play.

5. Method of operating the high-speed cutter according to one of claims 1 to 4, **characterised in that** a number of X revolutions of one drum is apportioned to a number of Y revolutions of the other drum, wherein the drums (1, 2) meet at a cutting position each time after different, but finite numbers of revolutions X, Y.

## Revendications

1. Cisaille volante pour couper des bandes laminées, comportant un premier tambour de lame (1) avec un diamètre comparativement plus grand et un deuxième tambour de lame (2) avec un diamètre comparativement plus petit, qui sont couplés en rotation par un rapport de réduction et chacun des tambours (1,2) est disposé solidement dans deux unités de support à l'intérieur du châssis de la machine (3), dans lequel la cisaille présente des moyens (4,5), qui guident la bande sous une tension longitudinale devant et derrière les tambours de lames (1,2) à travers la fente de tambour et la bande (10) subissant une contrainte de traction lors de son transport à travers la cisaille est disposée sur des rouleaux de transfert (6) ou sollicitée par ces derniers, lesquels élèvent la bande (10) respectivement avant le passage de la lame inférieure (7) et l'élèvent avant le passage de la lame supérieure (8) et dans lequel les tambours (1,2) possèdent des engrenages synchrones (9,11) qui leur sont solidement reliés, de trouvant en contact les uns avec les autres sans jeu, respectivement avec un jeu réduit, qui présentent des diamètres primitifs de fonctionnement différents, de l'ordre du diamètre de la lame (12,13),
**caractérisée en ce que**
le tambour supérieur (1) est remplacé par une plaque porte-lames (1') présentant le même diamètre de lame (12), laquelle est réalisée entre les bouts d'arbres (15,15') d'extrémité sous la forme d'un pont porte-lames (16).

2. Cisaille selon la revendication 1,
**caractérisée en ce que**
les rouleaux de transfert (6,6') coopèrent avec des moyens d'entraînement ou de réglage hydrauliques ou à transmission, lesquels sont synchronisés avec le passage respectif de la lame supérieure ou inférieure (8,7) à travers la fente de tambour.

3. Cisaille selon la revendication 1 ou 2,
**caractérisée en ce que**
au lieu des lames (7,8), un des tambours (1) est équipé d'un burin et l'autre tambour (2) est équipé d'une enclume.

4. Cisaille selon une ou plusieurs des revendications 1 à 3,
**caractérisée en ce que**
les deux tambours (1,2) sont pressés, respectivement prétensionnés rotativement l'un contre l'autre et/ou le jeu entre dents est minimisé, respectivement compensé, par exemple en divisant radialement le pignon (9), et **en ce que** les pièces sont prétensionnées rotativement l'une contre l'autre afin de compenser le jeu entre dents.

5. Procédé de fonctionnement de la cisaille volante selon une des revendications 1 à 4,
**caractérisé en ce que**
un nombre de révolutions X d'un des tambours correspond à un nombre de révolutions Y de l'autre tambour, moyennant quoi les tambours (1,2) se rencontrent à une position de découpage après des nombres de révolutions X,Y différents, néanmoins limités.
